# EUROPEAN PATENT APPLICATION

(11) **EP 1 643 416 A2**
(43) Date of publication of application: **05.04.2006**
(21) Application number: 05021538.3
(22) Date of filing: 30.09.2005
(51) Int. Cl.: G06K 9/20, A61B 5/117

(54) **Fingerprint image pickup device**

(30) Priority: 01.10.2004 JP 2004290575
(71) Applicant: MITSUBISHI DENKI KABUSHIKI KAISHA, Tokyo 100-8310 (JP)
(72) Inventor: Sano, Emiko, Chiyoda-ku Tokyo 100-8310 (JP); Shikai, Masahiro, Chiyoda-ku Tokyo 100-8310 (JP); Shiratsuki, Akihide, Chiyoda-ku Tokyo 100-8310 (JP); Nakashima, Toshiro, Chiyoda-ku Tokyo 100-8310 (JP)
(74) Representative: Popp, Eugen

(57) **Abstract**

A fingerprint image pickup device includes a light source (3) that emits a light to be transmitted through a subject that is a fingertip portion (1) having a fingerprint to be photographed, an image pickup means (5) that picks up the light from the light source to be transmitted through the subject to acquire a fingerprint image where a convex part of the fingerprint is dark and a concave part is bright, and an optical system (4) that enables the light transmitted through the subject from the light source to be imaged on the image pickup means. The light from the light source illuminates any other portion than a nail of the fingertip portion, and the light has a center of illumination on a center line in a width direction on a face where the nail of the fingertip portion exists and on an opposite side of a border of the nail to the nail.

## Description

### BACKGROUND OF THE INVENTION

### 1. Field of the Invention

The present invention relates to a fingerprint image pickup device, and more particularly to a fingerprint image pickup device for acquiring a stable fingerprint image, regardless of a wet state on a skin surface for fingerprint, even when the irregularities of fingerprint are obscure.

### 2. Description of the Related Art

The conventional fingerprint image pickup device holds a finger out of contact with a fingerprint part of a fingertip portion, applies the light from the instep side (back side) of the fingertip portion and detects the light transmitted through the inside of the finger. Since the transmissivity of the light transmitted through the fingertip portion is higher in the concave part than the convex part of fingerprint, an image that is brighter in the concave part than the convex part of fingerprint is obtained (e.g., refer to JP-A-2003-85538 (pages 3 to 4, Figs. 1 to 4)).

The conventional fingerprint image pickup device is constituted in the above way, and can acquire a stable fingerprint image, regardless of a wet state on a skin surface for fingerprint, even when the irregularities of fingerprint are obscure, but in some cases, there might be a portion where the shading contrast corresponding to the irregularities of fingerprint is unknown because the lightness is partially saturated or too low, so that the correct fingerprint information could not be obtained.

### SUMMARY OF THE INVENTION

The invention provides a fingerprint image pickup device that can produce a fingerprint image with clear shading contrast at the proper lightness in a range where the fingerprint information required for personal identification that is a main part is contained.

According to an aspect of the present invention, a fingerprint image pickup device includes a light source that emits a light to be transmitted through a subject that is a fingertip portion having a fingerprint to be photographed, an image pickup unit that picks up the light from the light source to be transmitted through the subject to acquire a fingerprint image where a convex part of the fingerprint is dark and a concave part is bright, and an optical system that enables the light transmitted through the subject from the light source to be imaged on the image pickup unit. The light from the light source illuminates any other portion than a nail of the fingertip portion, and the light has a center of illumination on a center line in a width direction on a face where the nail of the fingertip portion exists and on an opposite side of a border of the nail to the nail.

With the fingerprint image pickup device according to the invention, since a subject is a fingertip portion having a fingerprint to be photographed, a light to be transmitted through the subject from the light source is applied to the subject, an optical system enables the light transmitted through the subject from the light source to be imaged on the image pickup unit, and the image pickup unit picks up the light from the light source to be transmitted through the subject to acquire a fingerprint image where a convex part of the fingerprint is dark and a concave part is bright, it is possible to acquire a stable fingerprint image, regardless of a wet state on a skin surface for fingerprint, even when the irregularities of fingerprint are obscure.

And since the light to be transmitted through the subject has a center of illumination on a center line in a width direction on a face where a nail exists at the fingertip portion and on the opposite side of the nail to the border of the nail to illuminate any other portion than the nail, it is possible to produce a fingerprint image with clear shading contract at the proper lightness in a range where the fingerprint information required for personal identification that is amain part is contained.

Accordingly, it is possible to acquire more correct fingerprint information.

### BRIEF DESCRIPTION OF THE DRAWINGS

Fig. 1 is a side view showing the overall constitution of a fingerprint image pickup device according to an embodiment 1 of the present invention;
Fig. 2 is a bottom view showing a situation near a fingertip portion as seen from the ventral side according to the embodiment 1 of the invention;
Fig. 3 is a view showing a fingerprint image picked up by a CCD according to the embodiment 1 of the invention;
Fig. 4 is a view showing a fingerprint image picked up by the CCD according to the embodiment 1 of the invention;
Fig. 5 is a view showing a fingerprint image picked up by the CCD according to the embodiment 1 of the invention;
Fig. 6 is a view showing a fingerprint image picked up by the CCD according to the embodiment 1 of the invention;
Fig. 7 is a view showing the light illuminating points A to D on the back side of the fingertip portion according to the embodiment 1 of the invention;
Fig. 8 is a view for explaining an illumination area according to the embodiment 1 of the invention;
Fig. 9 is a side view showing another overall constitution of the fingerprint image pickup device according to the embodiment 1 of the invention;
Fig. 10 is a side view showing another constitution of an essential part of the fingerprint image pickup device according to the embodiment 1 of the invention;
Fig. 11 is a side view showing another constitution of an essential part of the fingerprint image pickup device according to the embodiment 1 of the invention; and
Fig. 12 is a side view showing the overall constitution of a fingerprint image pickup device according to an embodiment 2 of the invention.

### DETAILED DESCRIPTION OF THE INVENTION

The inventors of the present invention have found that the shading of a fingerprint image is affected by an illuminating position of light, when a subject is a fingertip portion having a fingerprint to be photographed, a light to be transmitted through the subject from a light source is applied to the subject, the light transmitted through the subject from the light source is imaged onto image pickup unit in an optical system, and the light transmitted through the subject from the light source is picked up by the image pickup unit to acquire a fingerprint image in which a convex part of the fingerprint is dark and a concave part is bright. If the light is applied principally to the nail, the nail tip is saturated and the root side is dark, or if the light is applied near the distal joint, the root side is bright and the nail tip is dark.

The inventors have astimated that the light striking the bone, which serves as a second light source, is scattered over a wide angle and transmitted through a fingertip portion up to a fingerprint portion at relatively uniform strength, but since the bone at the fingertip reaches only halfway of the nail, if the light from the light source is applied principally to the nail, the light not striking the bone is directly transmitted to intensify the shading.

Thereby, the inventors have concluded that if the light is applied to any other portion than the nail near the border of the nail, a fingerprint image with relieved shading can be picked up, contributing to the proper lightness in a range where the fingerprint information required for personal identification that is a main part is contained.

The range where the fingerprint information required for personal identification is contained as used herein means an area from the distal joint of finger to the fingertip, an area including the distal joint part, or an area including the fingerprint on the lateral face of finger, for example.

### Embodiment 1

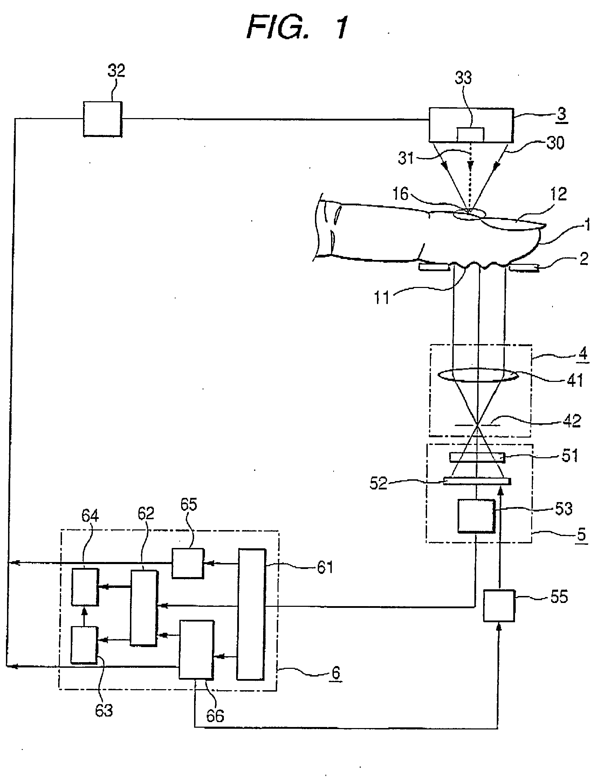

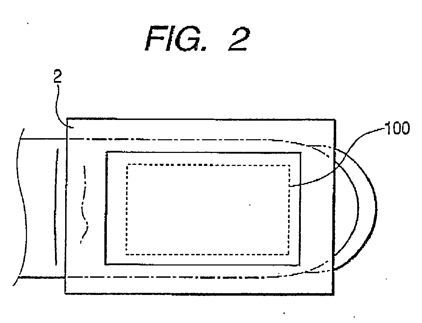

Figs . 1 and 2 are views for explaining a fingerprint image pickup device according to an embodiment 1 of the present invention. More specifically, Fig. 1 is a side view showing the overall corstitution of the fingerprint image pickup device, and Fig. 2 is a bottom view showing a situation near a fingertip portion as seen from the image pickup unit side (ventral side) .

The fingerprint image pickup device of this embodiment includes a light source 3 for emitting a light 30 to be transmitted through a subject that is a fingertip portion 1 having a fingerprint 11 to be photographed, such that its center of illumination may be on a center line in a width direction on a face where the nail 12 exists at the fingertip portion 1 and on the opposite side of the nail 12 to the border of the nail 12, to illuminate any other portion than the nail 12, image pickup unit 5 that picks up the light 30 from the light source 3 to be transmitted through the subject 1 to acquire a fingerprint image corresponding to a fingerprint 11 where a convex part of the fingerprint 11 is dark and a concave part is bright, an optical system 4 for enabling the light transmitted through the subject 1 from the light source 3 to be imaged on the image pickup unit 5, and a signal processing section 6 that acquires the fingerprint information by performing the image processing for the fingerprint image outputted from the image pickup unit 5 to identify the person based on the fingerprint information.

Further, the fingerprint image pickup device includes a unit (lightness determining section 66, light source drive circuit 32, gain adjusting circuit 55) that adjusts the lightness of an image by adjusting at least one of a light illuminating condition (brightness and illumination area 16) and a gain of image pickup unit 5 (image pickup element 52), and a unit (image processing section 62) that superposes or partly bonds a plurality of fingerprint images having different lightness for the same subject.

In this embodiment, the fingerprint image pickup device includes a subject holding section 2 (a subject holding section with an opening capable of holding the fingertip portion 1 out of contact with the surface of the fingerprint 11 to be photographed is shown in Fig. 1) that can hold the fingertip portion 1. An opening portion of the subject holding section with opening 2 is provided to include an observation face 100 that is a range where the image pickup unit 5 picks up the image.

The fingertip portion 1 that is the subject has a fingerprint 11 to be photographed on the ventral side, in which the fingerprint 1 has convex and concave patterns consisting of a convex part (ridge part) and a concave part (trough part) . In this invention, the fingertip portion 1 refers to not only the tip of a finger but also a portion from the tip of finger to the distal joint, or near the proximal joint.

The light source 3 for emitting the light 30 to be transmitted through the fingertip portion 1 toward the fingertip portion 30 is provided to cause the light to proceed from the back side (nail side) on the opposite side of the fingerprint 11 of the fingertip portion 1 to the ventral side (fingerprint side). The light source 3 has a dominant wavelength in a region from red rays to near infrared rays, namely, may emit a projection light having any wavelength (monochrome) in the region from red rays to near infrared rays, a projection light in which lights in the region from red rays to near infrared rays are mixed, or a projection light containing the light in the region from red rays to near infrared rays (monochrome or chromatic) as the dominant wavelength. For example, the light source may be a laser, a light emitting diode, or a lamp light source. The light in the region from red rays to near infrared rays is preferably employed because of high transmissivity of the light to the living body that is the subject 1, but the dominant wavelength is more preferably in a range from 600nm to 1400nm. Moreover, since the light absorption characteristic of hemoglobin in the blood vessel is minimum at about 660nm, the light in the region where the dominant wavelength is from 630nm to 780nm is more preferable to reduce the influence of the blood vessel on the fingerprint image.

Also, to avoid the influence of light from the outside, the fingertip portion 1 and the light source 3 may be covered with a light shielding body.

The light source 3 is composed of one or more of a laser, a light emitting diode and a lamp light source, and any number of lights can be turned on. The fingertip portion 1 is held by the subject holding section with opening 2, and when the observation face 100 is at a position contained within the opening of the subj ect holding section with opening 2, the light source 3 is placed to illuminate a predetermined area 16. Also, the illuminating condition (brightness and illumination area 16) of the light 30 to be applied to the subject 1 can be controlled by the light source drive circuit 32 that controls the element to be lighted. For example, when the light source 3 is composed of a plurality of light emitting elements, each element, or a small group of elements made to illuminate the same position (area) is installed to illuminate a different position (area) of the fingertip 1, and the element to be lighted is changed in accordance with the position, (area) to be illuminated. When the light 3 does not have a plurality of light emitting elements but has a single element, a drive section may be provided to control the light source to be moved to the position (area) to be illuminated.

Controlling the illumination area 16 includes both the position control and the area size control.

Also, the fingerprint image pickup device according to the embodiment includes a marker light source 33 for applying a marker light 31 for positioning of the subject 1 to the subject 1.

The marker light source 33 is placed such that the marker light 31 is not incident upon an image pickup element 52, if the fingertip portion 1 that is the subject is laid on the subject holding section with opening 2 to cover the opening portion, and the marker light 31 is incident upon the image pickup element 52 in a state where the fingertip portion 1 is not laid on the subject holding section with opening 2.

Moreover, if the subject 1 is moved to apply the marker light 31 to a predetermined position of the subject (fingertip portion) 1, the subject 1 can be disposed at a position where the light from the light source 3 is applied to the illumination area 16.

Though the marker light source 33 may be commonly employed with the light source 3, the marker light 31 may be projected from another light source to one or more positions of a curve along the arrow or nail cuticle or any other meaningful pattern which the person can decipher to be helpful to understand the position where the finger is held up.

Also, the wavelength of the marker light 31 is not only in the region from red rays to near infrared rays, but also in the region of visible rays visually seen by the user.

The optical system 4 focuses the light from the light source 3 transmitted through the convex part of the fingerprint 11 in the fingertip portion 1 and the light from the light source 3 transmitted through the concave part of the fingerprint 11 on the image pickup element 52. In this embodiment, the optical system 4 includes a lens 41 at a position where the transmitted light from the fingertip portion 1 firstly passes and a diaphragm 42 at a position where the transmitted light passes next to the lens 41 and which is telecentric on the object side (subject 1 side).

To acquire the clearer fingerprint image, the optical system may be composed of a plurality of lenses, including the lens 41 having principally the telecentric effect, a lens principally contributing to image formation that is placed at a position where the light passes after the diaphragm 42, and a lens having the effect of removing the distortion from the image.

The ventral side of the fingertip portion 1, namely, the surface of the fingerprint 11 to be photographed, is a curved surface, and the distance between the fingerprint 11 and the image pickup element 52 is different depending on the position within the observation face 100, thereby causing the image to be distorted due to fuzziness or different magnification depending on the position. Thus, the depth of field is increased to be in focus on the entire observation face 100, and the optical system telecentric on the object side is employed, whereby the fingerprint image of better contrast is acquired without having influence of fuzziness or varying magnification.

In the image pickup unit 5 (hereinafter often referred to as an image pickup system 5), the light having an intensity distribution and transmitted through the internal tissue of the fingertip portion 1 is imaged by the optical system 4 to acquire the fingerprint image corresponding to the fingerprint. The image pickup unit 5 includes a wavelength selection element 51 as a wavelength selection unit, an image pickup element 52, and an image output circuit 53 for converting an electric signal from the image pickup element 52 to an image electric signal.

The wavelength selection element 51 (a wavelength selection unit) selectively passes the light (in the region from red rays to near infrared rays) having a wavelength equivalent to the wavelength of the light source 3. Examples of the wavelength selection element 51 include an interference filter, a filter glass, and a plastic filter. An output light signal from the wavelength selection element 51 is imaged on the image pickup element 52.

Though the wavelength selection unit 51 is provided between the diaphragm 42 and the image pickup element 52 in Fig. 1, the wavelength selection unit 51 may be provided at a position between the lens 41 and the fingertip portion 1, between the lenses in the case where the lens 41 is composed of a plurality of lenses, or between the lens 41 and the diaphragm 42. Also, the lens 41 or the image pickup element 52 having a wavelength selection function may be employed.

The image pickup element 52 may be a two-dimensional solid-state image pickup device or a camera tube such as a CCD (Charge Coupled Device) or a CMOS (Complementary Metal Oxide Semiconductor) image sensor. The image pickup element 52 has a sensitivity to the light passing through the fingertip portion 1 to be transmitted through the internal tissue of the fingertip portion 1, namely, the light in the region from red rays to near infrared rays- The image pickup unit 5 is shielded not to receive any light other than from the fingertip portion 1. Also, a gain adjusting circuit 55 for adjusting the gain of the image pickup element 52 is provided.

A signal processing section 6 includes an image receiving section 61 that receives a signal from the image output circuit 53, an image processing section 62 that performs the binarization and thinning processing for a signal from the image receiving section 61, a fingerprint data saving section 53 that saves a signal received from the image processing section 62 as a registered image, and a personal identification section 64 that makes the personal identification by collating the image from the image processing section 62 with the image from the fingerprint data saving section 63, whereby the fingerprint image outputted from the image output circuit 53 is processed to obtain the fingerprint information, and identify the person based on the fingerprint information.

Moreover, the signal processing section 6 includes a finger existence determining section 65 that determines whether or not the finger exists by processing a signal from the image receiving section 61 and determining whether or not the signal falls within a predetermined threshold range to send the signal to the light source drive circuit 32.

Also, the image receiving section 61 has a function of temporarily storing the picked fingerprint image.

Further, the signal processing section 6 includes a lightness determining section 66 that determines whether or not the lightness of the fingerprint image taken in by the image receiving section 61 is within a predetermined threshold range, sending a signal to at least one of the light source drive circuit 32 and the gain adjustment circuit 55, based on the determination result, and adjusting at least one of the illuminating condition (intensity, illumination area 16) of the light 30 from the light source 3 illuminating the fingertip portion 1 and the gain of the image pickup element 52. That is, the lightness determining section 66 can determine the lightness of image in the entire area of fingerprint image, the entire range where the fingerprint information required for personal identification is obtained, the partially extracted area or the divided area.

Also, when a plurality of images are picked up by changing at least one of the illuminating condition and the gain of image pickup unit for the same subject, the lightness determining circuit 66 may redetermine the lightness of image every time the image is picked up. However, the lightness of each of the plurality of areas may be determined upon one time of determination, in which the results are saved, and at the second time and beyond, the lightness of image is adjusted from the saved results without determining the lightness again to make the lightness of each determination area proper.

Also, the image processing section 62 has a function of superposing or partially bonding a plurality of fingerprint images that are picked up by changing at least one of the illuminating condition of the light to the subject 1 and the gain of the image pickup unit (image pickup element 52), in addition to the binarization and thinning process.

The signal processing section 6 does not need to be provided with all the functions, but may be provided partially with the functions by connecting the image output circuit 53 to a personal computer. Also, when fingerprint data is saved but the personal identification is not made, for example the personal identification section 64 may be omitted.

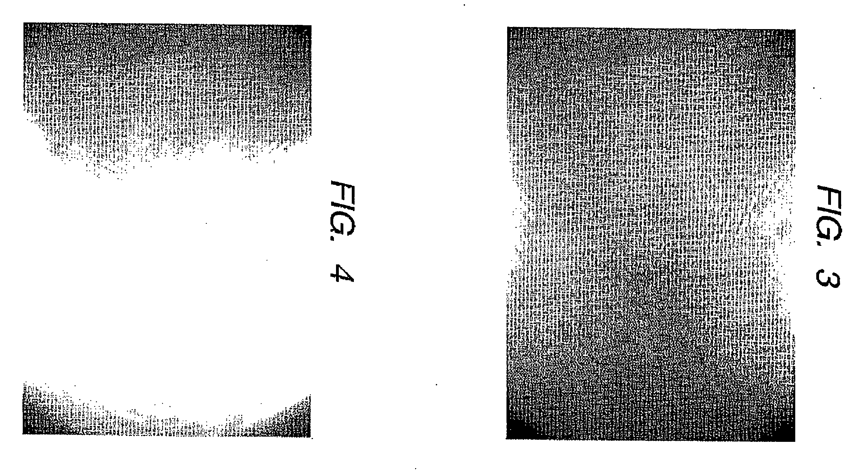

Referring to Figs. 3 to 7, the relationship between the illumination area (position) of the light 30 from the light source 3 and the lightness of obtained fingerprint image will be described below.

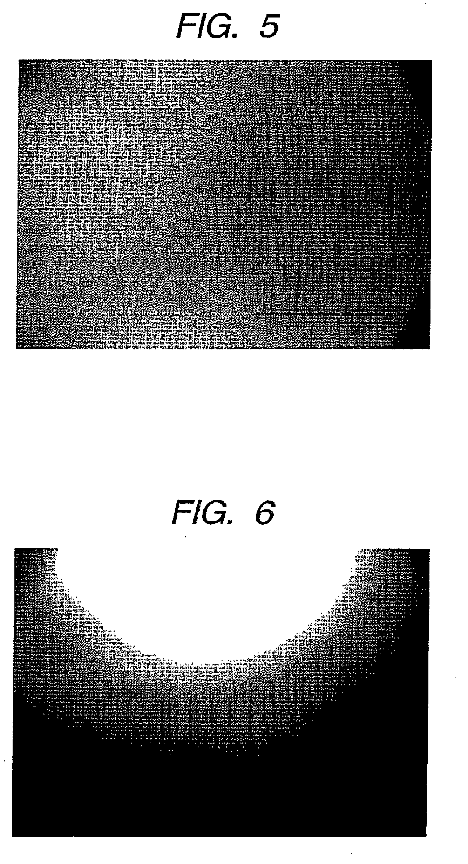

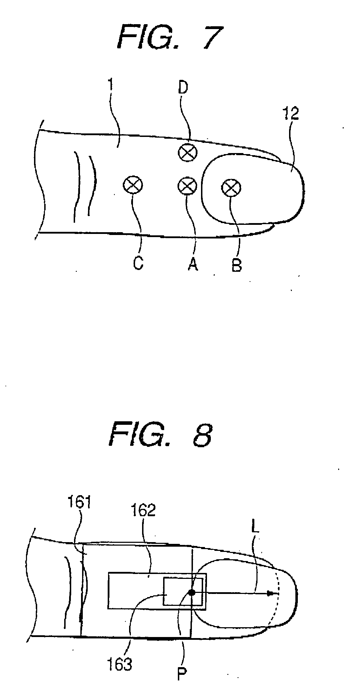

Figs. 3 to 6 are views showing the fingerprint image picked up by the CCD when the light (laser beam) is applied like a spot to each of the points A to D in Fig. 7. Fig. 3 shows a fingerprint image when a laser beam 30 is applied to point A of Fig. 7, Fig. 4 shows a fingerprint image when a laser beam 30 is applied to point B of Fig. 7, Fig. 5 shows a fingerprint image when a laser beam 30 is applied to point C of Fig. 7, and Fig. 6 shows a fingerprint image when a laser beam 30 is applied to point D of Fig. 7. In these figures in Figs. 3 to 7, the right side is the nail tip side (distal side of the fingertip portion 1). Fig. 7 is a view showing the illuminating points A to D of the light 30 to the back side of the fingertip portion 1.

Though the luminosity is almost uniform over the entire face of fingerprint image in Fig. 3, the nail tip side (distal side of the fingertip portion) near the illumination area 16 (point 3) is saturated in Fig. 4, and the nail tip side far from the illumination area 16 (point C) is dark in Fig. 5. In the width direction of the fingertip portion 1, it will be seen from Fig. 6 that a portion near the illumination area 16 (point D) is saturated and the opposite side is dark.

From these results, to acquire the fingerprint image having almost uniform luminosity over the almost entire face in the range where the fingerprint information required for personal identification is contained, it is preferred that the light illuminates any other portion than the nail 12 in which the point A of Fig. 7, or the center of illumination is located on the center line in the width direction on the face where the nail 12 of the fingertip portion 1 exists and on the opposite side of the nail 12 to the border of the nail 12.

The specific illumination areas 16 may include the point A (spot area) of Fig. 7, and a first illumination area 161, a second illumination area 162 and a third illumination area 163 as shown in Fig. 8, for example.

The first illumination area 161 is the area from the point P on the nail border to the distal joint on the root in the longitudinal direction, and not beyond the width of the fingertip portion 1 in the width direction, in which the center in the longitudinal direction is located at a position about half the length from the point P on the nail border to the distal joint.

The second illumination area 162 is the area where the root end portion is located at a position about three-fourths the length from the point P on the nail border to the distal joint in the longitudinal direction, and the distal end portion is located at a position nearer the distal end than the point P on the nail border, with the width being about one-third the width of finger, in which the center in the longitudinal direction is located at a position about one-third the length from the point P on the nail border to the distal joint.

The third illumination area 163 is the area where the root end portion is located at a position about one-fifth the length from the point P on the nail border to the distal joint in the longitudinal direction, and the distal end portion is located at a position nearer the distal end than the point P on the nail border, with the width being about one-fifth the width of finger, in which the center in the longitudinal direction is located at a position about one-tenth the length from the point P on the nail border to the distal joint.

The distal end portion in the longitudinal direction is preferably coincident with the point P on the nail border, but may slightly touch the nail 12. Assuming that the length from the point P on the nail border to the distal end of the fingertip portion 1 is L, the distal end portion in the longitudinal direction is preferably about one-third the length L from the point P on the nail border, more preferably about one-fourth the length L, and most preferably on a nail scarfskin (portion corresponding to epidermis of the nail).

Moreover, the shape of the illumination area 16 may be like an ellipse or rectangle inscribed in the area.

Since the near infrared light has a low transmissivity in the blood of the living body, the fingerprint image outputted from the image pickup unit 5 has lower lightness to decrease the contrast, when the pattern of blood vessel inside the fingertip portion 1 is superposed on the convex and concave pattern of the fingerprint 11. When one portion is extremely darker than other portions, the shading may be increased to make the portion brighter in picking up the image. For example, when the lightness of image in the portion on the nail tip side of the fingertip portion 1 is low, the light 30 from the light source 3 is applied intentionally to touch the nail 12, and the brightness or the gain of the image pickup element is adjusted, as needed, to make proper the lightness in the portion having low lightness of image on the nail tip side of the fingertip portion 1, in picking up the image, whereby the contrast of the portion having low lightness is improved. In this way, the shading is controlled by moving the illumination area (position) of the light 30 in the fingertip portion 1, partially improving the contrast.

The operation will be described below.

First of all, the marker light 31 is turned on with a quantity of light adequate for visual inspection, and the image is picked up at a regular interval by the image pickup element 52.

If the fingertip portion 1 is moved to apply the marker light 31 to a predetermined position and the fingertip portion 1 intercepts the marker light 31, the marker light 31 picked up by the image pickup element 52 is shut out, so that the image obtained by the image pickup element 52 has a predetermined lightness or below in a certain range. The image obtained by the image pickup element 52 is taken in from the image output circuit 53 into the signal processing section 6 by the image receiving section 61 of the signal processing section 6. Moreover, it is sent to the finger existence determination section 65 by the image receiving section 61, whereby if the lightness in the certain range on the image pickup element 52 (image obtained by the image pickup element 52) made by intercepting the marker light 31 with the fingertip portion 1 is within a predetermined threshold range, it is determined that the fingertip portion 1 exists in the image pickup range of the image pickup element 52.

At the same time, the user moves the fingertip portion 1 while inspecting visually, so that the marker light 31 may strike the optimal position of the fingertip portion 1, whereby the shading is optimized by optimizing the illuminating position of the light 30 from the light source 3 to the fingertip portion 1 and the quantity of illuminating light to the brightness of image can be more efficient-If the finger existence determination section 65 determines that the fingertip portion 1 exists within the image pickup range of the image pickup element 52, it sends a signal to the light source drive circuit 32 to project the light 30 to be transmitted through the fingertip portion 1, and turns the light source 3 by adjusting the number of elements to be lighted and the luminosity per element so that the light 30 from the light source 3 may have a predetermined luminosity. When the light source 3 is turned on, the marker light source 33 may be turned off, or kept on.

The light 30 applied on the back face (opposite face of the fingerprint 11) of the fingertip portion 1 is transmitted through the inside of finger to reach the fingerprint 11. The internal tissue near the surface on the ventral side of the fingertip portion 1 has a transmissivity distribution corresponding to the convex and concave pattern of the fingerprint 11, in which the light transmissivity of the internal tissue corresponding to the convex part of the fingerprint is low and the light transmissivity of the internal tissue corresponding to the concave part is high, so that the brightness of the light transmitted through the latter is higher than the former.

The light transmitted through the fingertip portion 1 and having an intensity distribution according to the fingerprint 11 is imaged on the image pickup element 52 by the lens 41 and the diaphragm 42 in the optical system 4 optically designed to be telecentric on the object side (the side of the fingertip portion 1 that is the subject). Between the diaphragm 42 and the image pickup element 52, the wavelength selection element 51 is arranged to select the light (in the region from red rays to near infrared rays) having the wavelength equivalent to that of the light source 3. The image output circuit 53 inputs an electric signal from the image pickup element 52, and outputs the fingerprint image where the trough part (concave part) of fingerprint is brighter than the ridge part (convex part) as the image electric signal.

The fingerprint image obtained in this way by the image pickup unit 5 is taken in by the image receiving section 61 provided for the signal processing section 6, and sent to the image processing section 62. The image processing section 62 performs the image processing of binarization and thinning for the fingerprint image to extract the fingerprint feature information (fingerprint information), as described in JP-A-10-334237, for example. The extracted data is saved in the fingerprint data saving section 63, as needed. The personal identification section 64 collates the data outputted from the image processing section 62 with the data saved in the fingerprint data saving section 63 to identify the person.

Next, adjusting the lightness of the fingerprint image and superposing or partly bonding a plurality of fingerprint images having different lightness that are picked up for the same subject will be described below.

In this embodiment, to acquire the fingerprint image with clear shading contrast at the proper lightness in the range containing the fingerprint information required for personal identification that is the main part of the fingerprint image, the light 30 from the light source 3 illuminates any portion (illumination area 16 such as the first to third illumination areas 161 to 163) other than the nail 12, so that the center of illumination is located on the center line in the width direction on the face where the nail 12 of the fingertip portion 1 exists and on the opposite side of the nail 12 to the border of the nail 12, as previously described.

However, there may be a portion where the ridge and trough of fingerprint are indiscernible due to saturated brightness or too low brightness in the range containing the fingerprint information required for personal identification that is the main part of the fingerprint image, producing the fingerprint image from which the information required for personal identification can not be extracted.

Thus, in this embodiment, before the image processing section 62 extracts the feature information of fingerprint, the lightness determination section 66 determines whether or not the lightness of the fingerprint image is excessive or not. If the lightness is excessive or deficient, at least one of the illuminating condition (brightness of the light source 3 or illumination area) and the gain of the image pickup element 52 is adjusted to gather the image of the optimal lightness, and the image is picked up again to acquire the image of the proper lightness.

To make the lightness proper in the range containing the fingerprint information required for personal identification that is the main part of the fingerprint image, the lightness may be adjusted multiple times, but not once, to pick up a plurality of images. Also, even when the proper lightness is attained in the range containing the fingerprint information required for personal identification that is the main part of the fingerprint image by one time of adjustment, the adjustment and the image pickup may be repeated multiple times to further increase the image quality and improve the contrast.

An instance where a plurality of images are gathered will be described below. The light 30 is applied from the light source 3 at a predetermined brightness to the prescribed illumination range 16, and an image is firstly picked up at the prescribed gain of the image pickup element 52. The image is sent from the image receiving section 61 to the lightness determination section 66, where the overall lightness is determined in the range containing the fingerprint information required for personal identification that is the main part of the fingerprint image. If the lightness is not proper, at least one of the brightness and the illumination area of the light source 3 by the light source drive circuit 32, and the gain by the gain adjustment circuit 55 is adjusted to make the lightness proper, and then the image is picked up again.

Herein, the overall lightness includes the lightness of the entire image that is judged from the overall lightness without the positional information for every pixel such as a histogram, the lightness of specific region, or the lightness in a narrow range such as a small number of profiles, in which the image may or may not contain partially too bright or too dark portion.

The image where the overall lightness is proper in the area including the range containing the fingerprint information required for personal identification that is the main part of the fingerprint image is partitioned into plural partial areas by the lightness determination section 66 to determine the lightness of image in each partial area. The plural partial areas may be two partial areas into which the entire area is divided on the distal side and the root side, or plural partial areas containing at least one or more pairs of ridge and trough of fingerprint that are extracted from the entire area.

If all the partial areas obtained in this way satisfy the proper lightness within the predetermined range of threshold, the image information of the image is sent to the image processing section 62 to extract the fingerprint information for personal identification or saving the fingerprint data.

Also, if there is at least one portion where the lightness of image is outside the predetermined range of threshold in each partial area, at least one of the brightness and illumination area of the light source 3 by the light source drive circuit 32 and the gain by the gain adjustment circuit 55 is adjusted to make the lightness of the entire partial area proper, and the image is picked up again, whereby the image is taken in from the image receiving section 61, and temporarily saved. The above operation is performed for all the'partial areas having at least one portion in which the lightness of image is outside the predetermined range of threshold, end the obtained image is temporarily saved in the image receiving section 61.

Next, the temporarily saved image is sent from the image receiving section 61 to the image processing section 64, where plural images are superposed or the partial areas satisfying the proper lightness within the predetermined range of threshold are segmented and bonded to acquire the image having proper lightness over the entire face in the range containing the fingerprint information required for personal identification.

Though in the above example, the image in which the overall lightness of the area including the range containing the fingerprint information required for personal identification that is the main part of the fingerprint image, or the lightness of prescribed specific region is proper, is partitioned into a plurality of partial areas, to determine the lightness of image in each partial area, and determine whether or not a plurality of images are picked up, a plurality of images having different lightness in which at least one of the illuminating condition and the gain of the image pickup element 52 is changed may be picked up from the beginning without determining the lightness of image in each partial area.

In this case, there is a method for picking up a plurality of images in which two or more kinds of threshold of lightness are decided in determining the lightness at the first time after picking up the image at the first time, and the brightness, illuminating position and illumination area of the light source 3 and the value of gain of the image pickup element 42 are decided to make the lightness of image corresponding to a respective threshold. That is, the threshold at which the almost entire face in the range containing the fingerprint information required for personal identification has proper lightness, and the threshold at which the image is brighter than the proper lightness but has no too dark portion or at which the image is darker than the proper lightness but has no saturated portion may be considered. The plurality of images obtained in this way are superposed or bonded to make one sheet of image.

In the above examples, in picking up the image at the first time, the light 30 from the light source 3 is preferably applied to any portion (illumination area 16 such as the first to third illumination areas 161 to 163) other than the nail 12 in which the center of illumination is located on the center line in the width direction on the face where the nail 12 of the fingertip portion 1 exists and on the opposite side of the nail 12 to the border of the nail 12 in order to acquire the fingerprint image having almost uniform luminosity over the almost entire face in the range containing the fingerprint information required for personal identification.

The images superposed or bonded by the image processing section 62 may be the images before or after the processing of binarization.

In the case where a plurality of images having different lightness picked up for the same subject are superposed or bonded, it is important to make the image pickup interval as snort as possible to prevent dislocation of the fingertip 1.

Though a plurality of images having different lightness picked up for the same subject are superposed or bonded in the above, the personal identification may be made, directly employing the fingerprint image in which the overall lightness is judged to be proper in the range containing the fingerprint information required for personal identification that is the main part of the fingerprint image, which is obtained by applying the light 30.from the light source 3 to the illumination area 16 such as the first to third illumination areas 161 to 163.

As described above, according to this embodiment, the fingerprint image pickup device includes the light source 3 for emitting the light 30 to be transmitted through the subject that is the fingertip portion 1 having the fingerprint 11 to be photographed, the image pickup unit 5 for picking up the light from the light source 3 to be transmitted through the subject to acquire a fingerprint image where the convex part of the fingerprint 11 is dark and the concave part is bright, and the optical system 4 for enabling the light transmitted through the subject from the light source 3 to be imaged on the image pickup element 52, wherein the light 30 from the light source 3 has its center of illumination on the center line in the width direction on the face where the nail 12 of the fingertip portion 1 exists and on the opposite side of the nail 12 part to the border of the nail 12 to illuminate any other portion than the nail 12. Accordingly, the stable fingerprint image can be produced, regardless of a wet state on the skin face of the fingerprint 11, even when the irregularities of the fingerprint 1 are obscure, and the fingerprint image has clear shading contrast at the proper lightness in the range containing the fingerprint information required for personal identification that is the main part of the fingerprint image. Consequently, the correct fingerprint information is obtained by preventing a degradation in the fingerprint image due to the lightness.

Also, since the fingerprint image pickup device further includes a unit (lightness determination section 66, light source drive circuit 32, gain adjustment circuit 55) that adjusts the lightness of image by adjusting at least one of the light illuminating condition and the gain of the image pickup unit 5 (image pickup element 52), and a unit (image processing section 62) that superposes or partly bonds a plurality of fingerprint images having different lightness for the same subject, the fingerprint image has clear shading contrast at the proper lightness in the range containing the fingerprint information required for personal identification that is the main part of the fingerprint image. Consequently, the correct fingerprint information is obtained by preventing a degradation in the fingerprint image due to the lightness.

Also, since the fingerprint image pickup device further includes the signal processing section 6 for acquiring the fingerprint information by performing the image processing for a fingerprint image outputted from the image pickup unit 5 and identifying the person based on the fingerprint information, the personal identification with higher performance is achieved based on the correct fingerprint information.

Though in the above embodiment, the lens 41 is employed as image formation unit, any other unit than the image formation lens may be employed such as a pinhole having an image formation function.

Also, in the above embodiment, since the near infrared light has a low transmissivity in the blood of the living body, in the fingerprint image outputted from the image pickup unit 5, the pattern of blood vessel inside the fingertip portion 1 is superposed on the convex and concave pattern of the fingerprint. Thus, the pattern of blood vessel may be removed from the fingerprint image outputted from the image pickup unit 5 in the following way.

That is, first of all, supposing the fingerprint image outputted from the image pickup unit 5 as the original image, the original image is smoothed to acquire a smoothed image. The convex and concave pattern of fingerprint has thinner lines than the pattern of blood vessel, whereby the convex and concave pattern of fingerprint is removed and the pattern of blood vessel is left in the smoothed image. And if a differential operation between the original image and the smoothed image is made, the fingerprint image in which the convex and concave pattern of fingerprint is only left is obtained, and the feature information of fingerprint is extracted from this fingerprint image.

Though the fingerprint image obtained by the image pickup unit 5 is processed by the signal processing section 6 to identify the person in the above explanation, needless to say, the fingerprint image may be simply acquired without personal identification.

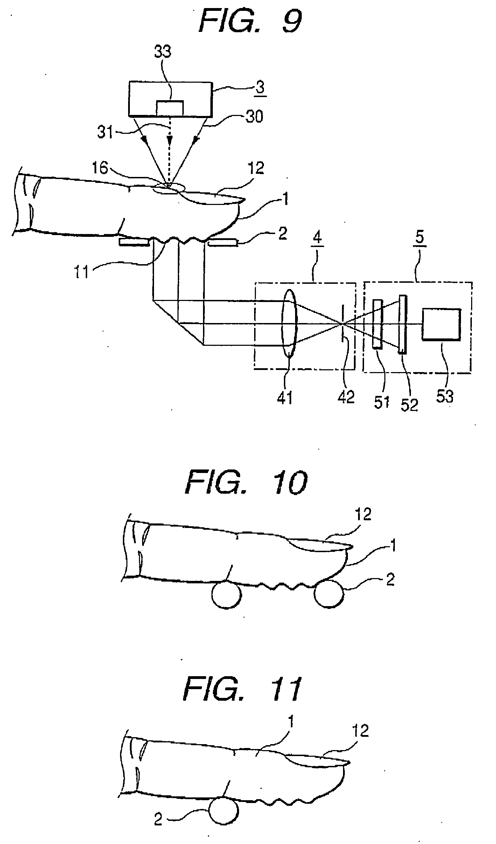

Also, to reduce the total size of the apparatus, a plane mirror 8 as a reflecting unit may be installed to deflect the light transmitted through the fingertip 1 and the optical system 4, the wavelength selection element 51, and the image pickup element 52 may be installed to be opposed to the deflected light, as shown in Fig. 9. In Fig. 9, the signal processing section 6 is omitted.

The reflecting unit is not limited to the plane mirror 8, but may be a curved-face mirror to reduce a distortion and an aberration of the image.

Also, a plurality of reflecting units are provided to further reduce the size.

Also, the plane mirror 8 is not necessarily provided between the lens 42 and the fingertip portion 1, but may be provided, for example, between the lens 41 and the diaphragm 42, or between the image pickup element 42 and the fingertip portion 1.

In Fig. 1, the fingertip portion 1 is placed so that the face of the fingerprint 11 on the ventral side is almost parallel to the image pickup face of the image pickup element 52, but may be disposed so that the face of the fingerprint 11 on the fingertip portion 1 makes an angle to the image pickup face of the image pickup element 52, thereby achieving the same effect.

The subject holding section 2 capable of holding the subject out of contact with the surface of fingerprint to be photographed is not limited to the shape of frame as shown in Figs. 1 and 2, but may be a rod shape of supporting the fingertip portion 1 near the distal joint outside the observation face 100 of the fingertip portion 1 as shown in Fig. 10, or at least one pair of opposed rods across the observation face 100 outside the observation face 100 as shown in Fig. 11.

### Embodiment 2

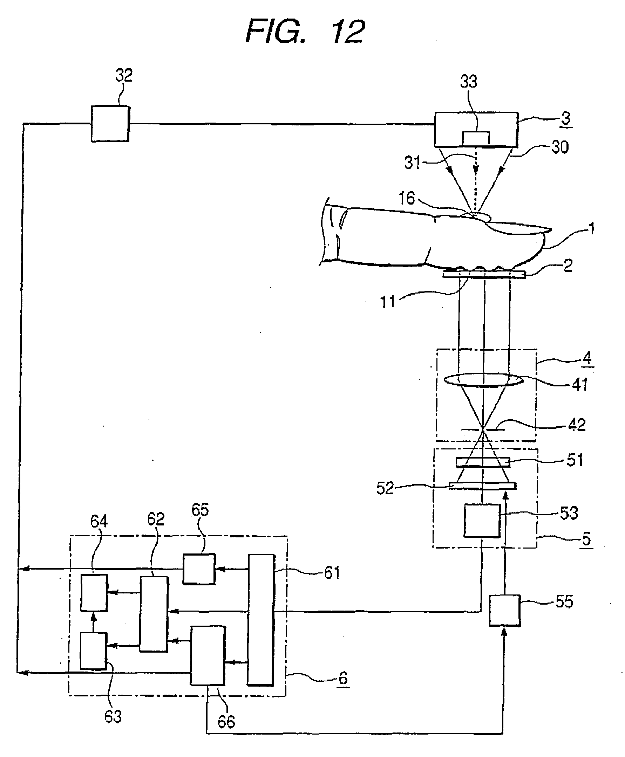

Fig. 12 is a view for explaining a fingerprint image pickup device according to an embodiment 2 of the invention, and more specifically, a side view showing the overall constitution of the fingerprint image pickup device. In the following, the different points from the embodiment 1 will be mainly described.

In this embodiment, the subject holding section 2 is not the subject holding section with opening 2 capable of holding the fingertip portion 1 out of contact with the surface of the fingerprint 11 to be photographed as shown in the embodiment 1, but is a transparent subject holding section without opening (hereinafter referred to as a transparent subject holding section) 2 capable of holding the fingertip portion 1 in contact with the surface of the fingerprint 11 to be photographed, which is a different point from the embodiment 1. The other constitution is the same as in the embodiment 1.

The operation is also the same as in the embodiment 1, and the same effect as in the embodiment 1 is obtained.

To acquire a fingerprint image in which the convex part of the fingerprint 11 is dark and the concave part is bright by picking up the light from the light source 3 to be transmitted through the convex part of the fingerprint 11 and the light from the light source 3 to be transmitted through the concave part of the fingerprint 11, it is required that the light incident on the transparent subject holding section 2 is detected in a direction at or below the critical angle of total reflection that is decided by the refractive index of the gas between the concave part of fingerprint and the transparent subject holding section 2 and the refractive index of the transparent subject holding section 2 on the fingerprint contact face of the subject holding section 2.

### Embodiment 3

Though in the embodiments 1 and 2, the subject holding section 2 capable of holding the fingertip portion 1 is provided, the subject holding section 2 may not be necessarily provided-In this embodiment, the subject holding section 2 is not provided, but the fingertip portion corresponding to the subject is out of contact with the structure, which is a different point from the embodiment 1. The other constitution is the same as in the embodiment 1.

With this constitution, there is the same effect as in the embodiment 1.

## Claims

1. A fingerprint image pickup device comprising:
a light source (3) for emitting a light to be transmitted through a subject that is a fingertip portion (1) having a fingerprint to be photographed;
image pickup means (5) for picking up the light from the light source to be transmitted through the subject to acquire a fingerprint image where a convex part of the fingerprint is dark and a concave part is bright; and
an optical system (4) for enabling the light transmitted through the subject from the light source to be imaged on the image pickup means,
**characterized in that** the light from the light source illuminates any other portion than a nail of the fingertip portion, and
the light has a center of illumination on a center line in a width direction on a face where the nail of the fingertip portion exists and on an opposite side of a border of the nail to the nail.

2. The fingerprint image pickup device according to claim 1,
**characterized by** further comprising:
means for adjusting a lightness of an image by adjusting at least one of a light illuminating condition and a gain of the image pickup means, and
means for superposing or partly bonding a plurality of fingerprint images having different lightness for the same subject.

3. The fingerprint image pickup device according to claim 1 or 2,
**characterized by** further comprising:
a signal processing section (6) acquiring fingerprint information by performing an image processing for the fingerprint image outputted from the image pickup means and identifying a person based on the fingerprint information.
